# EUROPEAN PATENT APPLICATION

(11) **EP 4 654 159 A1**
(43) Date of publication of application: **26.11.2025**
(21) Application number: 24744867.3
(22) Date of filing: 17.01.2024
(51) Int. Cl.: G06V 40/13, G06V 40/10, G06V 10/82, G06T 7/194, G06V 10/46, G06V 10/26, G06V 10/44, H04M 1/02

(54) **FINGERPRINT RECOGNITION METHOD USING MOBILE DEVICE AND APPARATUS EMPLOYING SAME**

(30) Priority: 17.01.2023 KR 20230006785; 22.05.2023 KR 20230065439
(71) Applicant: Xperix Inc., Seongnam-si, Gyeonggi-do 13211 (KR)
(72) Inventor: KIM, Byung geun, Hanam-si, Gyeonggi-do 12967 (KR); KIM, Chang min, Seoul 05790 (KR); KIM, Dae hyun, Bucheon-si, Gyeonggi-do 14540 (KR); PARK, Bo Gun, Seoul 05834 (KR)
(74) Representative: Westphal, Mussgnug & Partner Patentanwälte mbB
(86) International application number: PCT/KR2024/000804
(87) International publication number: WO 2024/155087

(57) **Abstract**

A method for fingerprint recognition using a mobile device and an apparatus using the same are disclosed. A method for recognizing a fingerprint in a contactless manner according to an embodiment may comprising: acquiring an original image including a user's hand using an optical sensor included in a terminal, acquiring a hand image from the original image using a neural network model based on the original image, acquiring at least one fingertip image based on the hand image, and acquiring at least one fingerprint information from the at least one fingertip image.

## Description

### [Technical Field]

The present invention relates to a method for fingerprint recognition using a mobile device and an apparatus using the same.

### [Background Art]

A method of recognizing a user's fingerprint is widely used as a method for confirming the identity of a user. Conventionally, a separate fingerprint recognition device had to be used to recognize a user's fingerprint. However, since it is difficult for a user to carry a fingerprint recognition device, the user's fingerprint can be recognized only in a specific place where the fingerprint recognition device is installed, so it was difficult to recognize the fingerprint at a time desired by the user regardless of the place.

Also, after the spread of mobile devices such as smartphones has become popular, fingerprint recognition methods using mobile devices are being widely used. For example, a technology for recognizing a user's fingerprint using a contact-type fingerprint sensor such as an ultrasonic sensor disposed behind a display panel of a mobile device is being used. However, in most mobile usage examples, a protective film may be attached to the display panel of the mobile device, and in this case, there is a problem that the fingerprint recognition performance of the contact-type fingerprint sensor is lowered.

Recently, research to solve these problems is continuing.

### [Detailed Description of Invention]

### [Technical Object]

The technical problem of the present application is to provide a fingerprint recognition method for improving fingerprint recognition performance by recognizing a user's fingerprint using a contactless fingerprint sensor of a mobile device.

Also, another technical problem of the present application is to provide a fingerprint recognition method for improving fingerprint recognition performance by recognizing a user's fingerprint using a machine learning model.

The technical problems of the present application are not limited to the above-mentioned problems, and problems not mentioned will be clearly understood by those skilled in the art to which the present invention belongs from the present specification and the accompanying drawings.

### [Technical Solution]

A method for recognizing a fingerprint in a contactless manner according to an embodiment may comprises acquiring an original image including a user's hand using an optical sensor included in a terminal, acquiring a hand image from the original image using a neural network model based on the original image, acquiring at least one fingertip image based on the hand image, and acquiring at least one fingerprint information from the at least one fingertip image.

The technical solution methods of the present application are not limited to the above-mentioned solution means, and solution means not mentioned will be clearly understood by those skilled in the art to which the present invention belongs from the present specification and the accompanying drawings.

### [Advantageous Effects]

According to the present application, fingerprint recognition performance can be improved by recognizing a user's fingerprint using an optical sensor of a mobile device.

Also, according to the present application, fingerprint recognition performance can be improved by recognizing a user's fingerprint using a machine learning model.

The effects of the present application are not limited to the above-mentioned effects, and effects not mentioned will be clearly understood by those skilled in the art to which the present invention belongs from the present specification and the accompanying drawings.

### [Description of Drawings]

FIG. 1 is an environmental diagram of a biometric information recognition system according to an embodiment.
FIG. 2 is a block diagram for explaining a terminal according to an embodiment.
FIG. 3 is a block diagram for explaining a server according to an embodiment.
FIG. 4 is a diagram for explaining an image processing method according to an embodiment.
FIG. 5 is a diagram for explaining a guide interface provided in a terminal according to an embodiment.
FIG. 6 is a diagram for explaining a mask image extraction module according to an embodiment.
FIG. 7 is a diagram for explaining a mask image according to an embodiment.
FIG. 8 is a diagram for explaining the structure of a first model according to an embodiment.
FIG. 9 is a diagram for explaining a method for distinguishing left hand or right hand based on an original image according to an embodiment.
FIG. 10 is a diagram for explaining binarization of a hand image according to an embodiment.
FIG. 11 is a diagram for explaining finger separation according to an embodiment.
FIG. 12 is a diagram for explaining fingertip segmentation based on a finger image according to an embodiment.
FIG. 13 is a diagram for explaining fingertip segmentation based on a finger image according to another embodiment.
FIG. 14 is a diagram for explaining fingerprint information extraction according to an embodiment.
FIG. 15 is a diagram for explaining quality determination according to an embodiment.
FIG. 16 is a diagram for explaining spoofing determination according to an embodiment.

### [Best Mode]

A method for recognizing a fingerprint in a contactless manner according to an embodiment may comprises acquiring an original image including a user's hand using an optical sensor included in a terminal, acquiring a hand image from the original image using a neural network model based on the original image, acquiring at least one fingertip image based on the hand image, and acquiring at least one fingerprint information from the at least one fingertip image.

### [Modes of the Invention]

The embodiments described in this specification are for clearly explaining the idea of the present invention to those skilled in the art to which the present invention belongs, so the present invention is not limited to the embodiments described in this specification, and the scope of the present invention should be interpreted as including modifications or variations that do not depart from the spirit of the present invention.

The terms used in this specification are selected from general terms that are widely used at present in consideration of the functions in the present invention, but this may vary depending on the intention of those skilled in the art to which the present invention belongs, precedents, or the emergence of new technologies. However, when a specific term is defined and used with an arbitrary meaning, the meaning of the term will be described separately. Therefore, the terms used in this specification should be interpreted based on the substantial meaning of the term and the content throughout this specification, not just the name of the term.

The drawings attached to this specification are for easily explaining the present invention, and the shapes shown in the drawings may be exaggerated as necessary to help understand the present invention, so the present invention is not limited by the drawings.

In this specification, when it is determined that a detailed description of known configurations or functions related to the present invention may obscure the gist of the present invention, detailed descriptions thereof will be omitted as necessary.

Hereinafter, a data processing method and an apparatus using the same according to an embodiment of the present invention will be described.

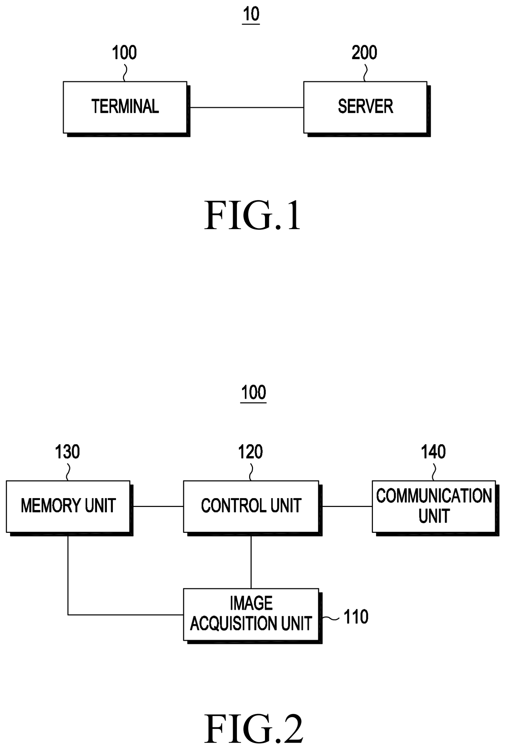

FIG. 1 is an environmental diagram of a biometric information recognition system according to an embodiment.

Referring to FIG. 1, the biometric information recognition system 10 may include a terminal 100 and a server 200. Here, the terminal 100 may include various devices that can be independently operated, such as a mobile device, a fixed fingerprint recognition device, a portable fingerprint recognition device, and a PC. Also, the server 200 may mean various devices capable of performing data processing by communicating with the terminal 100.

Although not shown in FIG. 1, the biometric information recognition system 10 may include a biometric information recognition module (not shown), and the biometric information recognition module (not shown) may be included in at least one of the terminal 100 or the server 200. The biometric information recognition module (not shown) can recognize biometric information based on an image obtained by an optical sensor or the like. Here, biometric information means information about a part of a user's body that can identify the user, for example, biometric information may include information about a user's face, information about veins (finger veins) or palm veins, information about eyes, and information about fingerprints. The biometric information recognition module (not shown) can acquire an image of a part of the user's body through an optical sensor and acquire biometric information using the acquired image. Hereinafter, for convenience of explanation, biometric information will be described focusing on information about fingerprints. However, it is not limited thereto, and biometric information may include information about a part of the user's body described above. Also, the biometric information recognition module (not shown) will be described later.

In one embodiment, the terminal 100 includes an image acquisition unit such as an optical sensor, and can acquire an original image using the image acquisition unit. Here, the original image may include a user's hand and background. When the biometric information recognition module (not shown) is included in the terminal 100, the terminal 100 can acquire fingerprint information based on the original image acquired by the image acquisition unit. The terminal 100 can provide the acquired fingerprint information to the server 200. For example, when the server 200 performs user authentication, the server 200 can perform user authentication using the fingerprint information acquired from the terminal 100 and provide the user authentication result to the terminal 100.

Also, when the biometric information recognition module (not shown) is included in the server 200, the terminal 100 can provide the server 200 with an original image acquired by the image acquisition unit or an image processed from the original image. The server 200 can acquire fingerprint information based on the image acquired from the terminal 100. The server 200 can provide the acquired fingerprint information to the terminal 100. For example, when the terminal 100 performs user authentication, the terminal 100 can perform user authentication using the fingerprint information acquired from the server 200 and provide the user authentication result to the server 200.

FIG. 2 is a block diagram for explaining a terminal according to an embodiment.

Referring to FIG. 2, the terminal 100 may include an image acquisition unit 110, a control unit 120, a memory unit 130, and a communication unit 140.

The image acquisition unit 110 can generate an original image. The image acquisition unit 110 can generate an original image corresponding to a subject by converting light emitted or reflected from the subject into an electrical signal. For example, the image acquisition unit 110 may include one image sensor selected from RGB sensors, BW (Black and White) sensors, infrared sensors, or ultraviolet sensors, a plurality of optical sensors having the same properties, or a plurality of optical sensors having different properties. At least one optical sensor included in the image acquisition unit 110 may be implemented using a CCD (Charged Coupled Device) sensor or a CMOS (Complementary Metal Oxide Semiconductor) sensor. For example, when the terminal 100 is a mobile device, the image acquisition unit 110 may include a camera built into the mobile device.

The control unit 120 can control each component of the terminal 100 or process and calculate various information. The control unit 120 can perform various image processing on the original image acquired by the image acquisition unit 110. The control unit 120 may include one or more of a CPU (Central Processing Unit), a GPU (Graphic Processing Unit), one or more microprocessors, and other electronic components capable of processing input data according to predetermined logic.

Also, the control unit 120 may be implemented as software, hardware, and combinations thereof. For example, in terms of hardware, the control unit 120 may be implemented as an FPGA (Field Programmable Gate Array), an ASIC (Application Specific Integrated Circuit), a semiconductor chip, and various other forms of electronic circuits. Also, for example, in terms of software, the control unit 120 may be implemented as a logic program performed according to the above-described hardware or various computer languages. Also, when a biometric information recognition module (not shown) is included, the control unit 120 can perform the operation of the biometric information recognition module (not shown).

Also, the memory unit 130 stores instructions for controlling the control unit 120, and the control unit 120 can perform operations based on the instructions stored in the memory unit 130.

Also, when the biometric information recognition module (not shown) is included in the terminal 100, the memory unit 130 can store instructions, programs, necessary information, etc. required for the operation of the biometric information recognition module (not shown). Also, the memory unit 130 can store the original image acquired by the image acquisition unit 110.

Also, the memory unit 130 may include at least one type of storage medium among Flash Memory type, Hard Disk type, Multimedia Card Micro type, card type memory (for example, SD or XD memory, etc.), RAM (Random Access Memory), SRAM (Static Random Access Memory), ROM (Read-Only Memory), EEPROM (Electrically Erasable Programmable Read-Only Memory), PROM (Programmable Read-Only Memory) magnetic memory, magnetic disk, and optical disk. Also, the memory can store information temporarily, permanently, or semi-permanently, and can be provided as built-in or removable.

The communication unit 140 can perform communication with a server.

The communication unit 140 can mainly perform communication according to wireless communication standards, but may include wired and wireless modules that transmit data through various communication standards including BLE (Bluetooth Low Energy), Bluetooth, WLAN (Wireless LAN), WiFi (Wireless Fidelity), WiFi Direct, NFC (Near Field Communication), infrared communication (Infrared Data Association; IrDA), UWB (Ultra Wide Band), Zigbee, 3G, 4G or 5G mobile communication modules, and other various communication standards. Also, the communication unit 140 may include a short-range wireless module that supports NFC (Near Field Communication), RFID (Radio-Frequency Identification), etc.

Also, the terminal 100 may be provided in a form with additional configurations for performing additional functions and operations according to selection.

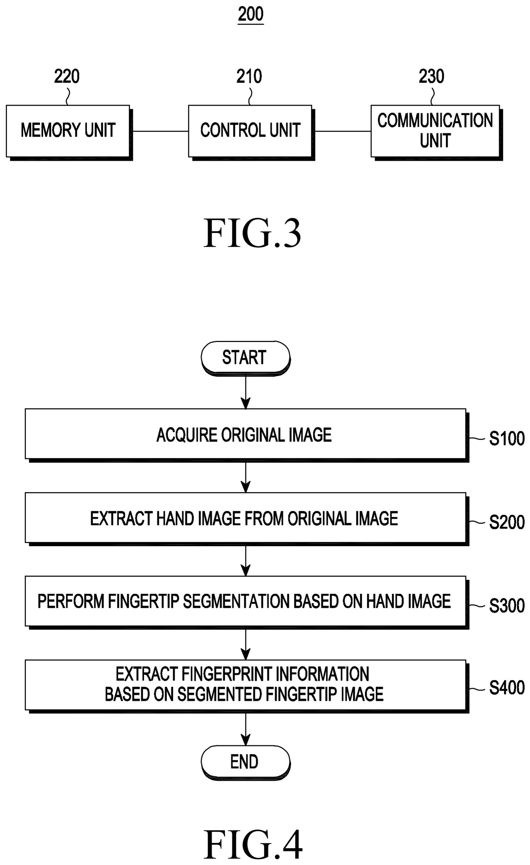

FIG. 3 is a block diagram for explaining a server according to an embodiment.

Referring to FIG. 3, the server 200 may include a control unit 210, a communication unit 220, and a memory unit 230.

The control unit 210 can control each component of the server 200 or process and calculate various information. For example, the server 200 can perform various image processing on the original image acquired from the terminal 100. The control unit 210 may include one or more of a CPU (Central Processing Unit), a GPU (Graphic Processing Unit), one or more microprocessors, and other electronic components capable of processing input data according to predetermined logic.

Also, the control unit 210 may be implemented as software, hardware, and combinations thereof. For example, in terms of hardware, the control unit 120 may be implemented as an FPGA (Field Programmable Gate Array), an ASIC (Application Specific Integrated Circuit), a semiconductor chip, and various other forms of electronic circuits. Also, for example, in terms of software, the control unit 210 may be implemented as a logic program performed according to the above-described hardware or various computer languages. Also, when a biometric information recognition module (not shown) is included, the control unit 210 can perform the operation of the biometric information recognition module (not shown).

Also, the memory unit 220 stores instructions for controlling the control unit 210, and the control unit 210 can perform operations based on the instructions stored in the memory unit 220.

Also, when the biometric information recognition module (not shown) is included in the server 200, the memory unit 220 can store instructions, programs, necessary information, etc. required for the operation of the biometric information recognition module (not shown).

Also, the memory unit 220 may include at least one type of storage medium among Flash Memory type, Hard Disk type, Multimedia Card Micro type, card type memory (for example, SD or XD memory, etc.), RAM (Random Access Memory), SRAM (Static Random Access Memory), ROM (Read-Only Memory), EEPROM (Electrically Erasable Programmable Read-Only Memory), PROM (Programmable Read-Only Memory) magnetic memory, magnetic disk, and optical disk. Also, the memory can store information temporarily, permanently, or semi-permanently, and can be provided as built-in or removable.

The communication unit 230 can perform communication with the terminal 100. The communication unit 230 can mainly perform communication according to wireless communication standards, but may include wired and wireless modules that transmit data through various communication standards including BLE (Bluetooth Low Energy), Bluetooth, WLAN (Wireless LAN), WiFi (Wireless Fidelity), WiFi Direct, NFC (Near Field Communication), infrared communication (Infrared Data Association; IrDA), UWB (Ultra Wide Band), Zigbee, 3G, 4G or 5G mobile communication modules, and other various communication standards. Also, the communication unit 140 may include a short-range wireless module that supports NFC (Near Field Communication), RFID (Radio-Frequency Identification), etc.

Also, the server 200 may be provided in a form with additional configurations for performing additional functions and operations according to selection.

FIG. 4 is a diagram for explaining an image processing method according to an embodiment.

Referring to FIG. 4, an image processing method according to an embodiment may include acquiring an original image (S100), extracting a hand image from the original image (S200), performing fingertip segmentation based on the hand image (S300), and extracting fingerprint information based on the segmented fingertip image (S400). The image processing method may be performed by a biometric information recognition module. For example, when the biometric information recognition module is included in a terminal, the image processing method may be performed by the terminal. Also, when the biometric information recognition module is included in a server, the image processing method may be performed by the server.

In step S100, the biometric information recognition module can acquire an original image. When the biometric information recognition module is included in a terminal, the biometric information recognition module can acquire the original image from the image acquisition unit included in the terminal. Also, when the biometric information recognition module is included in a server, the original image is acquired through the image acquisition unit in the terminal, and the server can receive the original image from the terminal.

Also, in one embodiment, the image acquisition unit of the terminal can acquire the original image using an auto-focus function. For example, to acquire a high-quality original image, the image acquisition unit can continuously acquire images of the viewing angle of the optical sensor of the image acquisition unit (for example, 30 frames/60 frames per second), analyze the acquired images to calculate the focal distance between the subject (for example, the user's hand) and the optical sensor of the image acquisition unit in each image, and extract an image whose focal distance is within a predetermined range from the critical distance as the original image.

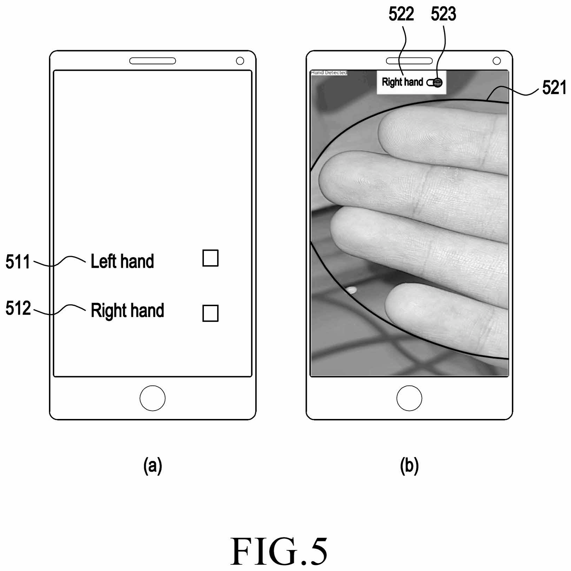

Also, in one embodiment, the biometric information recognition module can acquire information about whether the hand included in the original image is a left hand or a right hand. This will be described in detail using FIG. 5.

FIG. 5 is a diagram for explaining a guide interface provided in a terminal according to an embodiment.

Referring to FIG. 5, in (a), the biometric information recognition module can display interfaces 511, 512 for acquiring information about whether the user's hand captured by the image acquisition unit of the terminal is a left hand or a right hand. When receiving input from the user for any one of the interfaces 511, 512, the biometric information recognition module can confirm that the hand corresponding to the selected interface is the hand included in the original image.

Also, referring to (b), the biometric information recognition module can display a guide interface 521. The guide interface 521 can display an area where the user's hand captured by the image acquisition unit of the terminal should be positioned. The area indicated by the guide interface 521 may be a preset area for high-quality fingerprint recognition results. When the terminal captures the user's hand after the user's hand is positioned within the area indicated by the guide interface 521, the original image can have high quality while reducing noise in the original image. For example, when the biometric information recognition module receives input for the interface 512 from the user, it can display a guide interface 521 indicating the area where the user's right hand should be positioned. Also, the biometric information recognition module can display an interface 522 indicating the right hand together. As another example, when the biometric information recognition module receives input for the interface 511 from the user, it can display a guide interface (not shown) indicating the area where the user's left hand should be positioned. Also, the biometric information recognition module can display an interface (not shown) indicating the left hand together. Also, in the interface 522 indicating the hand selected by the user, an interface 523 for selecting whether to display the guide interface 521 may be included. For example, when the biometric information recognition module acquires input for the interface 523 to be toggled to the right from the user, it can display the guide interface 521. Also, when the biometric information recognition module acquires input for the interface 523 to be toggled to the left from the user, it may not display the guide interface 521.

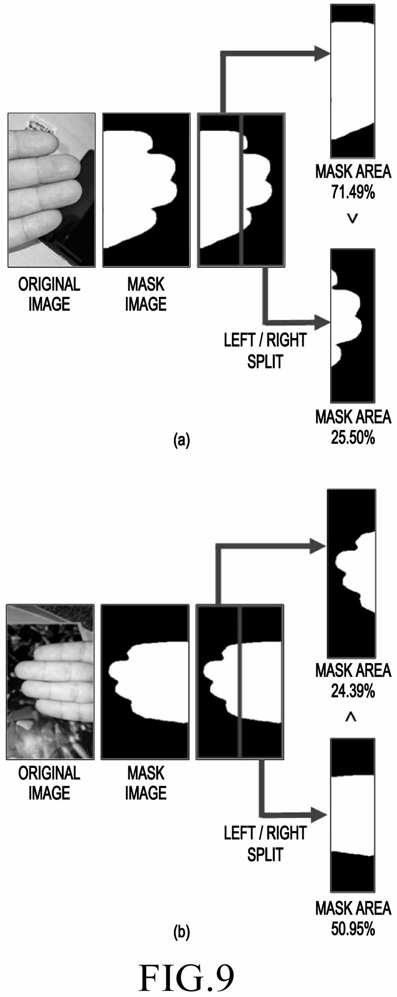

However, it is not limited thereto, and the biometric information recognition module can acquire information about whether the hand included in the original image is a left hand or a right hand based on the original image. This will be described in detail using FIG. 9.

Referring to FIG. 4 again, in step S200, the biometric information recognition module can extract a hand image from the original image. Here, the hand image may mean an image from which the background has been removed from the original image.

In one embodiment, the biometric information recognition module can acquire a mask image for the hand from the original image, and acquire a hand image by applying the mask image to the original image. Here, the mask image may mean an image in which the hand region is masked and the region other than the hand region is distinguished from the masked region. For example, in the mask image, the region other than the hand may be displayed as a black region, and the hand region may be displayed as a white region (empty region). The biometric information recognition module can overlap the original image and the mask image, and accordingly, the background in the original image can be displayed in black by the mask image so that only the hand region appears.

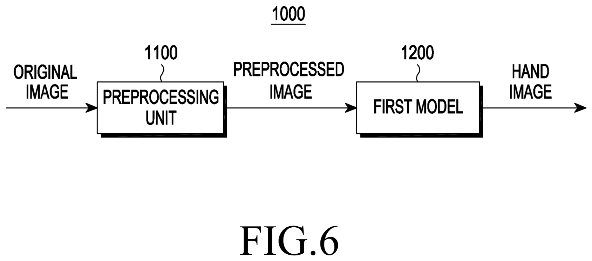

Also, in one embodiment, the biometric information recognition module can acquire a mask image based on the original image using a machine learning module. This will be described in detail using FIG. 6.

FIG. 6 is a diagram for explaining a mask image extraction module according to an embodiment.

Referring to FIG. 6, the mask image extraction module 1000 may be included in the biometric information recognition module. Also, the mask image extraction module 1000 may be physically or logically separated from the biometric information recognition module, and may be driven by the biometric information recognition module. Also, the mask image extraction module 1000 may include a preprocessing unit 1100 and a first model 1200.

The biometric information recognition module can input the original image to the preprocessing unit 1100. The preprocessing unit 1100 can preprocess the original image to be suitable for processing in the first model 1200 and input the preprocessed image to the first model 1200. Of course, it is not limited thereto, and the biometric information recognition module can input the original image to the first model 1200 without going through the preprocessing unit 1100.

In one embodiment, the preprocessing unit 1100 can perform various preprocessing such as image size change, image normalization, image crop, image binarization, image rotation, image transformation, etc. on the original image. For example, the preprocessing unit 1100 can perform downscaling on the original image to reduce the size of the original image. This is because when the size of the original image is large, the processing speed in the first model 1200 may be slow, so the size of the original image can be converted to a predetermined size to improve the processing speed of the first model 1200 while maintaining the accuracy of the mask image output from the first model 1200 above a predetermined level.

Also, the first model 1200 may be a machine learning model. The machine learning model described in this specification may be designed based on various machine learning libraries. For example, the machine learning model may mean various types of models designed based on supervised, unsupervised, semi-supervised, or reinforcement learning artificial intelligence algorithms such as decision trees, random forest algorithms, stochastic gradient descent algorithms, neural network algorithms, k-nearest neighbor algorithms, linear regression, logistic regression, support vector machines, k-means, Hierarchical Cluster Analysis (HCA), Expectation Maximization, Principal Component Analysis (PCA), Kernel PCA, Locally-Linear Embedding (LLE), t-distributed Stochastic Neighbor Embedding (t-SNE), Apriori, Eclat, etc. Hereinafter, unless otherwise specified, the machine learning model is described as a neural network model for convenience, but this does not necessarily mean only a model type based on a neural network algorithm, and it is obvious that it can be replaced with a model based on other algorithms within the scope of the functions and purposes of the invention described in this specification.

In one embodiment, the first model 1200 may include a Convolutional Neural Network (CNN) as a neural network model. As the structure of the convolutional neural network, at least one of AlexNet, LENET, NIN, VGGNet, ResNet, WideResnet, GoogleNet, FractaNet, DenseNet, FitNet, RitResNet, HighwayNet, Depthwise Convolution, MobileNet V1, MobileNet V2, MobileNet V3, DeeplySupervisedNet may be used. Of course, besides these, the convolutional neural network may be implemented with other structures. Also, the first model 1200 may be implemented using a plurality of CNN structures.

As an example, the neural network model may be implemented to include a plurality of VGGNet blocks. As a more specific example, the neural network model may be provided by combining a first structure in which a convolution layer having N filters of a×a size, a BN (Batch Normalization) layer, and a ReLU (Rectified Linear Unit) layer are sequentially combined, and a block in which a convolution layer having N*2 filters of a×a size, a ReLU layer, and a BN layer are sequentially combined. Subsequently, the neural network model includes a max pooling layer, and may include a GAP (Global Average Pooling) layer, an FC (Fully Connected) layer, and an activation layer (for example, sigmoid, softmax, etc.) at the end.

Also, the first model 1200 may be pre-trained using a labeled data set (for example, a data set in which background regions are labeled). However, it is not limited thereto, and the first model 1200 may be trained in an unsupervised manner using unlabeled data. Training of the first model 1200 may be performed by acquiring a result value using a neural network model to which arbitrary weight values are assigned based on a plurality of training image data (for example, a plurality of original images), comparing the acquired result value with a label value of the training data, performing backpropagation according to the error, and optimizing the weight values. Also, the training of the first model 1200 may be affected by feedback from the verification results and/or test results of the first model 1200.

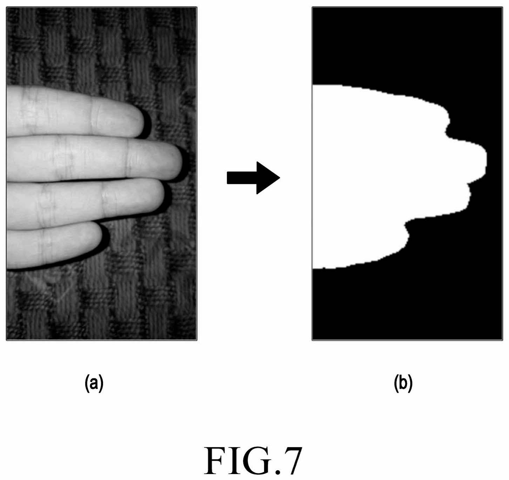

Also, the first model 1200 can generate a mask image based on the preprocessed image. For example, as shown in FIG. 7, when a preprocessed image as shown in (a) is input to the first model 1200, a mask image as shown in (b) can be output from the first model 1200. As shown in (b), in the mask image, the background part can be displayed in black, and the finger part can be masked in white.

Also, in one embodiment, the biometric information recognition module can perform upscaling on the mask image to increase the size of the mask image. For example, a downscaled image by the preprocessing unit 1100 may be input to the first model 1200, and the first model 1200 may output a mask image having a size corresponding to the input image. The biometric information recognition module can perform upscaling on the mask image so that the mask image has a size corresponding to the size of the original image. Also, according to an embodiment, even when the downscaled image is input to the first model 1200, the first model 1200 may output a mask image having a size corresponding to the size of the original image.

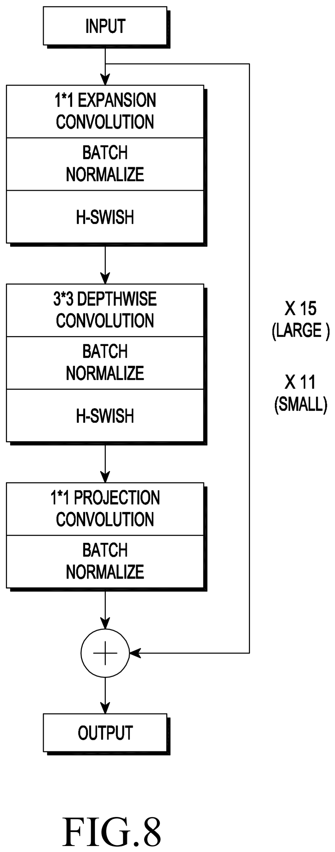

Also, as described above, the first model 1200 may include convolutional neural network models of various structures. As one embodiment, an example in which the first model 1200 includes a MobileNet-based convolutional neural network will be described using FIG. 8.

FIG. 8 is a diagram for explaining the structure of a first model according to an embodiment.

Referring to FIG. 8, in one embodiment, the first model may be generated based on any one structure of MobileNet V1, V2, or V3.

First, the first model based on MobileNet V1 replaces the convolution layer with a Depthwise Separable Convolution layer in the existing convolutional neural network structure, and can replace the 3D convolution layer with a Spatial Convolution layer and a Channel Convolution layer. Also, the depthwise separable convolution layer may include at least one of a depthwise convolution layer, a batch normalize layer, a ReLU layer, a pointwise convolution layer (= 1*1 convolution layer), a batch normalize layer, or a ReLU layer.

Also, the first model based on MobileNet V2 is for solving problems caused by nonlinear functions such as ReLU layers during dimension reduction, for example, it may be a model for solving the problem of information loss because all values below 0 are discarded when passing through the function. For this purpose, the first model based on MobileNet V2 can reduce the probability of information loss by using Channel Expansion. The first model based on MobileNet V2 includes a Bottleneck Residual Block, and the bottleneck residual block may include at least one of a 1*1 convolution layer (channel expansion), a batch normalize layer, a ReLU layer, a 3*3 convolution layer, a batch normalize layer, a ReLU layer, a 1*1 convolution layer, or a batch normalize layer.

Also, the first model based on MobileNet V3 searches for an optimal model structure through NAS (Network Architecture Search) (for example, AutoML), trains to find an optimal model structure using reinforcement learning techniques, and may be a model with an improved Last Stage of the network to a more efficient structure. Also, the first model based on MobileNet V3 can apply a better-performing Swish layer instead of the ReLU layer. Also, instead of the Swish layer, which takes somewhat longer to compute in mobile/embedded environments, a faster H-Swish layer with similar results can be used. The first model based on MobileNet V3 may include at least one of an expansion convolution layer (for example, 11 expansion convolution layer), a batch normalize layer, an H-Swish layer, a depthwise convolution layer (for example, 3*3 depthwise convolution layer), a batch normalize layer, an H-Swish layer, a projection convolution layer (for example, 1*1 projection convolution layer), or a batch normalize layer. Also, according to an embodiment, the first model based on MobileNet V3 may include a plurality of the at least one layer. For example, the first model based on MobileNet V3 may include 11 or 15 of the layers.

In one embodiment, a downscaled image and/or an original image from the preprocessing unit of FIG. 6 may be input to the first model based on MobileNet V3, and after passing through the layers, a mask image may be output.

FIG. 9 is a diagram for explaining a method for distinguishing left hand or right hand based on an original image according to an embodiment.

Referring to FIG. 9, the biometric information recognition module can determine whether the hand included in the original image is a left hand or a right hand based on the original image.

Referring to (a), the biometric information recognition module can input the original image to the first model and acquire a mask image from the first model. The biometric information recognition module can analyze the mask image to determine whether the hand included in the original image is a left hand or a right hand.

Specifically, the biometric information recognition module can divide the mask image into left/right. For example, the biometric information recognition module can divide the mask image into left/right based on the center area of the horizontal axis of the mask image (or based on the width of the mask image). The biometric information recognition module can determine whether the hand included in the original image is a left hand or a right hand based on the ratio of the masked area in the divided left image and right image. For example, as shown in (a), the mask area of the left image among the divided images may be 71.49%, which is larger than 25.50%, the mask area of the right image, and in this case, the biometric information recognition module can determine that the hand included in the original image is a left hand. Also, as shown in (b), the mask area of the left image among the divided images may be 24.39%, which is smaller than 50.95%, the mask area of the right image, and in this case, the biometric information recognition module can determine that the hand included in the original image is a right hand.

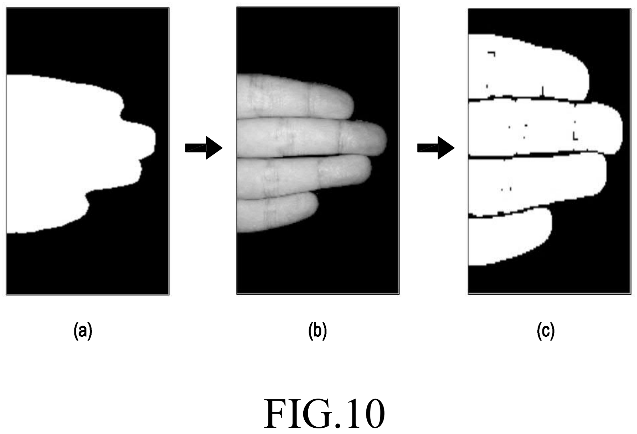

FIG. 10 is a diagram for explaining binarization of a hand image according to an embodiment.

Referring to FIG. 10, the biometric information recognition module can acquire a mask image as shown in (a), as described above. Here, the acquired mask image may have a size corresponding to the size of the original image. The biometric information recognition module can acquire a hand image by overlapping the mask image of (a) with the original image. At this time, according to an embodiment, the biometric information recognition module can convert the original image to grayscale or convert the image overlapped with the mask image to grayscale to acquire a hand image as shown in (b).

Also, the biometric information recognition module can perform binarization on the hand image to acquire a binarized image as shown in (c). For example, in the case of a mask image, the space between fingers may not be distinguished. However, when binarization is performed on the hand image, the space between fingers can be displayed in black and distinguished.

Also, according to an embodiment, the biometric information recognition module can perform preprocessing on the hand image or the binarized image. For example, the biometric information recognition module can perform preprocessing on the hand image or the binarized image to improve quality. As a specific example, the biometric information recognition module can adjust contrast or perform histogram equalization on the hand image or the binarized image.

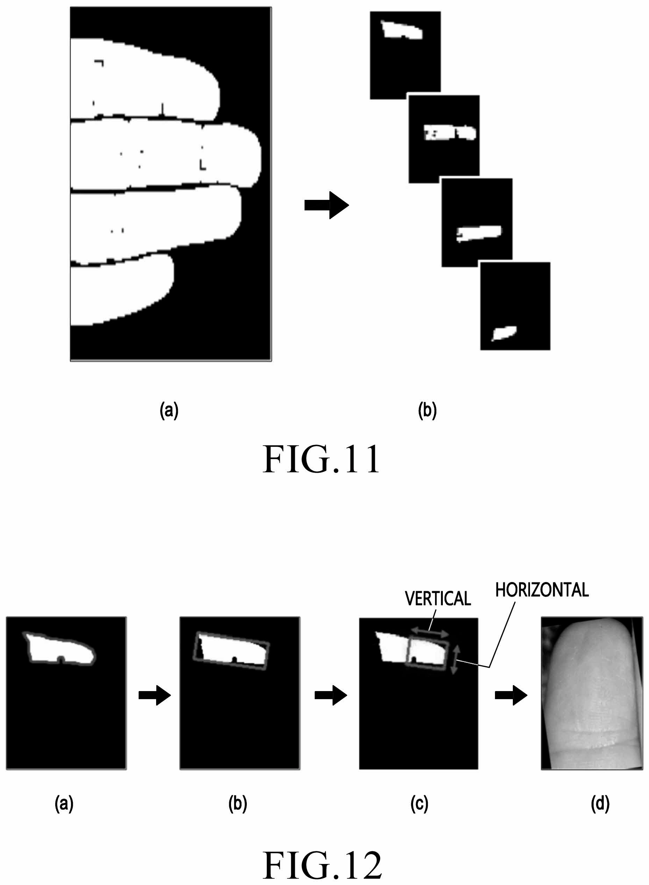

Referring to FIG. 4 again, in step S300, the biometric information recognition module can perform fingertip segmentation based on the hand image. Here, fingertip segmentation may mean distinguishing at least one finger constituting the hand image by finger. For example, the biometric information recognition module can perform fingertip segmentation using the binarized image of FIG. 10 described above. This will be described in detail using FIG. 11.

FIG. 11 is a diagram for explaining finger separation according to an embodiment.

Referring to FIG. 11, the biometric information recognition module can perform finger separation based on the binarized image of FIG. 10. In one embodiment, the biometric information recognition module can perform finger separation by separating white regions from the binarized image. For example, in the binarized image, the space between fingers may be displayed as black regions. The biometric information recognition module can separate white regions from black regions between fingers and black regions outside fingers in the binarized image, and extract the separated white regions as fingers.

Also, in one embodiment, the biometric information recognition module can identify which finger the extracted finger is. For example, the biometric information recognition module can sequentially identify the finger at the highest position to the finger at the lowest position in the binarized image as the second finger to the fifth finger. Also, the biometric information recognition module can acquire information about fingers such as the length of each finger and the width of each finger from the binarized image and/or the separated finger image, and identify the fingers using the information about the fingers.

Also, in one embodiment, the biometric information recognition module can identify which finger the extracted finger is based on information about whether the hand included in the original image is a left hand or a right hand. For example, according to an embodiment, the binarized image may be aligned so that the finger center is located on the left and the finger tip is located on the right as shown in (a). In this case, when identifying the finger from the highest position to the finger at the lowest position in the binarized image as the second finger to the fifth finger, the finger can be accurately identified in the case of the left hand, but the finger may be inaccurately identified in the case of the right hand. This is because, in the case of the right hand, when the binarized image is aligned so that the finger center is located on the left and the finger tip is located on the right, the finger at the highest position may be the fifth finger, and the finger at the lowest position may be the second finger. For this purpose, the biometric information recognition module can identify which finger the extracted finger is based on information about whether the hand included in the original image is a left hand or a right hand. For example, when obtaining information that the hand included in the original image is a right hand, the biometric information recognition module can sequentially identify the finger from the highest position to the finger at the lowest position as the fifth finger to the second finger.

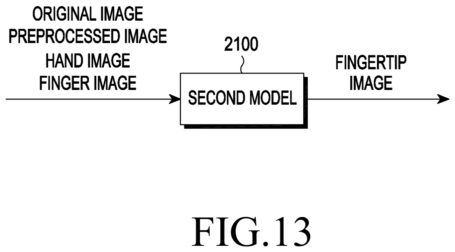

Referring to FIG. 4 again, in step S300, the biometric information recognition module can perform fingertip segmentation from each finger image. This will be described in detail using FIGS. 12 and 13.

FIG. 12 is a diagram for explaining fingertip segmentation based on a finger image according to an embodiment.

Referring to FIG. 12, the biometric information recognition module can detect the contour of a finger as shown in (a). For example, the biometric information recognition module can extract the boundary between the white region and the black region of the finger image, and set the extracted boundary as the contour of the finger. Also, the biometric information recognition module can extract a block circumscribing the finger based on the contour of the finger as shown in (b). For example, the biometric information recognition module can create a rectangle including the contour of the finger, and set the created rectangle as the block. Also, the biometric information recognition module can extract a fingertip based on the horizontal/vertical ratio of the block. For example, the biometric information recognition module can detect the horizontal length in the block, calculate the vertical length corresponding to the detected horizontal length to match a predetermined horizontal/vertical ratio, crop the finger image by the calculated vertical length, and extract the cropped image. Also, in another example, the biometric information recognition module can crop an area of a predetermined vertical length based on the right end of the block, and extract the cropped image.

Also, the biometric information recognition module can generate a fingertip image by overlapping the cropped image with the original image. For example, the size of the binary image and the original image correspond, and the cropped image includes position information in the binary image. The biometric information recognition module can overlap the cropped image with the original image based on the position information, and extract the overlapped area as a fingertip image.

Also, the biometric information recognition module can rotate the fingertip image to be suitable for fingerprint recognition. For example, the biometric information recognition module can rotate the fingertip image by a predetermined angle. As an example, the biometric information recognition module can rotate the fingertip image 90 degrees counterclockwise. As another example, the biometric information recognition module can rotate the fingertip image so that the end of the block is located on the upper surface.

FIG. 13 is a diagram for explaining fingertip segmentation based on a finger image according to another embodiment.

Referring to FIG. 13, the biometric information recognition module can perform fingertip segmentation using a machine learning model. In one embodiment, the biometric information recognition model may include a second model 2100. The second model 2100 may be a machine learning model.

The biometric information recognition module can input at least one of the above-mentioned original image, preprocessed image, hand image, or finger image to the second model 2100. Also, the second model 2100 can be pre-trained on at least one of the original image, preprocessed image, hand image, or finger image and the fingertip image. Accordingly, the second model 2100 can output a fingertip image based on at least one of the original image, preprocessed image, hand image, or finger image. The above-mentioned machine learning algorithm can be used for the second model 2100. Accordingly, a detailed description of the second model 2100 is omitted.

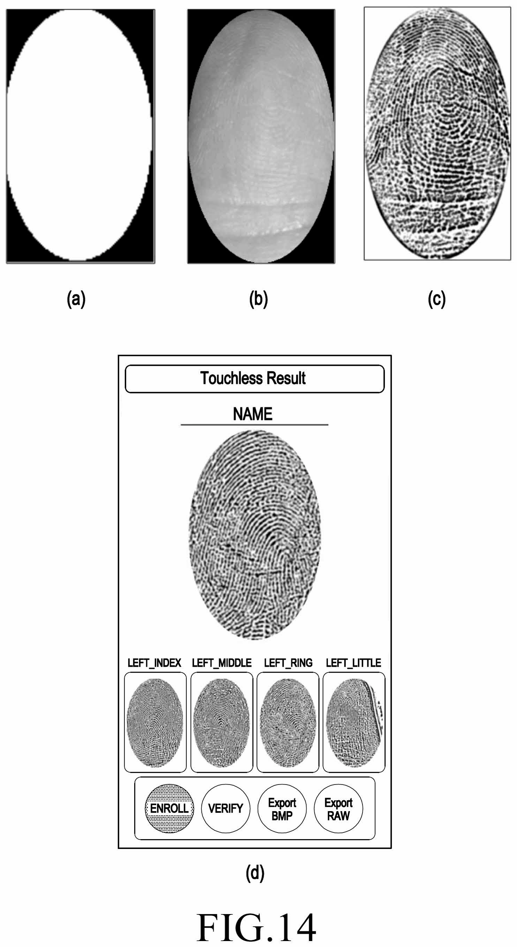

Referring to FIG. 4 again, in S400, the biometric information recognition module can extract fingerprint information based on the segmented fingertip image. The fingertip image may include a fingerprint image, and the biometric information recognition module can extract a fingerprint image from the fingertip image and acquire fingerprint information based on the fingerprint image. This will be described in detail using FIG. 14.

FIG. 14 is a diagram for explaining fingerprint information extraction according to an embodiment.

Referring to FIG. 14, the biometric information recognition module can generate a fingertip mask image from the fingertip image. For example, the biometric information recognition module can extract an ellipse inscribed in the fingertip image. The biometric information recognition module can set the outer part of the ellipse as a black region and set the inner part of the ellipse as a white region (empty region) to acquire a fingertip mask image as shown in (a).

Also, the biometric information recognition module can acquire a masked fingertip image as shown in (b) by overlapping the fingertip mask image with the fingertip image. As the fingertip mask image overlaps with the fingertip image, the black region of the fingertip mask image is displayed in black in the masked fingertip image, and the white region of the fingertip mask image may include the fingerprint region of the fingertip image in the masked fingertip image.

Also, the biometric information recognition module can extract fingerprint information based on the fingerprint region of the masked fingertip image. In one embodiment, the fingerprint region of the masked fingertip image is in color, and the extracted fingerprint information may be a black and white image as shown in (c). This may be to ensure that the extracted fingerprint information is compatible with the fingerprint information of black and white images obtained from conventional fingerprint recognition devices. Of course, according to an embodiment, the biometric information recognition module can extract fingerprint information of a color image from the fingerprint region of the masked fingertip image. Extracting fingerprint information of black and white or color images from the fingerprint region of the masked fingertip image can use various fingerprint information extraction algorithms, so detailed description is omitted. Also, exemplarily, the biometric information recognition module can provide fingerprint information for each finger as shown in (d).

Also, in another embodiment, the biometric information recognition module can extract fingerprint information using a machine learning model. In one embodiment, the biometric information recognition model may include a fingerprint extraction model (not shown). The fingerprint extraction model (not shown) may be a machine learning model.

The biometric information recognition module can input at least one of the above-mentioned original image, preprocessed image, hand image, finger image, or fingertip image to the fingerprint extraction model (not shown). Also, the fingerprint extraction model (not shown) can be pre-trained on at least one of the original image, preprocessed image, hand image, finger image, or fingertip image and fingerprint information. Accordingly, the fingerprint extraction model (not shown) can acquire fingerprint information based on at least one of the original image, preprocessed image, hand image, finger image, or fingertip image. The above-mentioned machine learning algorithm can be used for the fingerprint extraction model (not shown). Accordingly, a detailed description of the fingerprint extraction model (not shown) is omitted.

Referring to FIG. 4 again, the biometric information recognition module can perform quality determination on at least one of the original image, preprocessed image, hand image, finger image, fingertip image, or fingerprint information. When the quality of fingerprint information is below a predetermined quality, it is difficult to determine user authentication, so the biometric information recognition module can determine the quality of fingerprint information. Also, since the quality of fingerprint information is affected by the original image, preprocessed image, hand image, finger image, and fingertip image, the biometric information recognition module can also perform quality determination on the original image, preprocessed image, hand image, finger image, and fingertip image.

In one embodiment, when the quality determination result shows that the quality is below a predetermined quality, the biometric information recognition module can perform again from step S100 of FIG. 4 described above. For example, when the quality determination result shows that the quality is below a predetermined quality, the biometric information recognition module can acquire the original image again using the image acquisition unit of the terminal.

Also, the biometric information recognition module can perform quality determination at any of steps S100 to S400 of FIG. 4 described above.

Also, the biometric information recognition module can perform quality determination using a predetermined algorithm. For example, the biometric information recognition module can check the number of fingers in an image containing multiple fingers (for example, original image, preprocessed image, hand image). For example, the biometric information recognition module can determine that the quality is below a predetermined quality when the number of fingers in an image containing multiple fingers is not a predetermined number of fingers (for example, 4). Also, the biometric information recognition module can determine that the quality is below a predetermined quality when the size of fingers included in each image is outside a predetermined range. Also, the biometric information recognition module can determine whether there is blur in each image, and if there is blur, determine that the quality is below a predetermined quality. Also, the biometric information recognition module can determine whether there is finger movement in each image, and if there is finger movement, determine that the quality is below a predetermined quality. Also, the biometric information recognition module can determine the resolution of each image, and if the resolution is below a predetermined resolution, determine that the quality is below a predetermined quality. In addition, the biometric information recognition module can determine the quality of each image using various quality determination criteria.

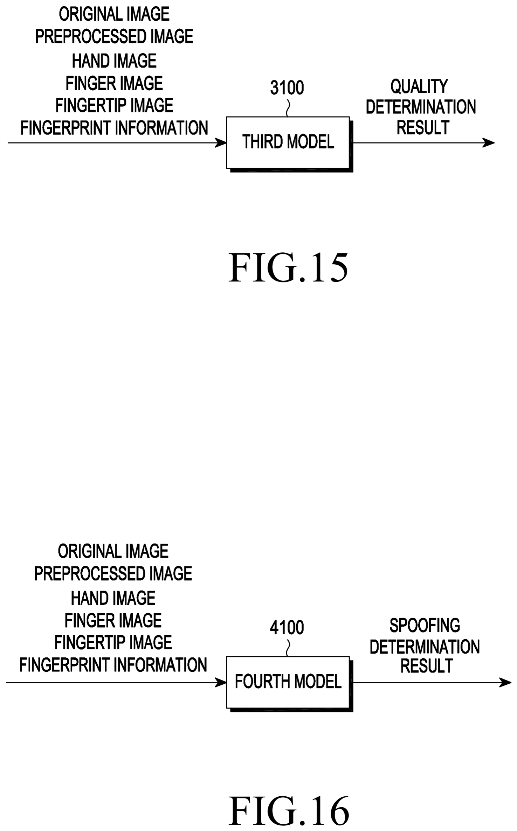

Also, the biometric information recognition module can perform quality determination using a machine learning model. This will be described in detail using FIG. 15.

FIG. 15 is a diagram for explaining quality determination according to an embodiment.

Referring to FIG. 15, the biometric information recognition model may include a third model 3100. The third model 3100 may be a machine learning model.

The biometric information recognition module can input at least one of the above-mentioned original image, preprocessed image, hand image, finger image, fingertip image, or fingerprint information to the third model 3100. Also, the third model 3100 can be pre-trained on at least one of the original image, preprocessed image, hand image, finger image, fingertip image, or fingerprint information and quality information. Accordingly, the third model 3100 can perform quality determination based on at least one of the original image, preprocessed image, hand image, finger image, fingertip image, or fingerprint information. For example, the third model 3100 can perform quality determination on the number of fingers in an image containing multiple fingers (for example, original image, preprocessed image, hand image), the size of fingers included in each image, whether there is blur in each image, whether there is finger movement in each image, the resolution of each image, or various other quality determination criteria, and output the quality determination result. The above-mentioned machine learning algorithm can be used for the third model 3100. Accordingly, a detailed description of the third model 3100 is omitted.

Referring to FIG. 4 again, the biometric information recognition module can perform spoofing determination on at least one of the original image, preprocessed image, hand image, finger image, fingertip image, or fingerprint information. Here, spoofing determination may mean determining whether the finger included in each image is a human finger or a fake finger (for example, paper with a finger printed on it, silicon finger, etc.).

In one embodiment, when the spoofing determination result shows that the finger included in each image is determined to be a fake finger, the biometric information recognition module can perform again from step S100 of FIG. 4 described above. For example, when the spoofing determination result shows that the finger included in each image is determined to be a fake finger, the biometric information recognition module can acquire the original image again using the image acquisition unit of the terminal.

Also, the biometric information recognition module can perform spoofing determination at any of steps S100 to S400 of FIG. 4 described above.

Also, the biometric information recognition module can perform spoofing determination using a predetermined algorithm. Since existing algorithms can be used for spoofing determination using a predetermined algorithm, detailed description is omitted.

Also, the biometric information recognition module can perform spoofing determination using a machine learning model. This will be described in detail using FIG. 16.

FIG. 16 is a diagram for explaining spoofing determination according to an embodiment.

Referring to FIG. 16, the biometric information recognition model may include a fourth model 4100. The fourth model 4100 may be a machine learning model.

The biometric information recognition module can input at least one of the above-mentioned original image, preprocessed image, hand image, finger image, fingertip image, or fingerprint information to the fourth model 4100. Also, the fourth model 4100 can be pre-trained on at least one of the original image, preprocessed image, hand image, finger image, fingertip image, or fingerprint information and spoofing information. Accordingly, the fourth model 4100 can perform spoofing determination based on at least one of the original image, preprocessed image, hand image, finger image, fingertip image, or fingerprint information. The above-mentioned machine learning algorithm can be used for the fourth model 4100. Accordingly, a detailed description of the fourth model 4100 is omitted.

Various embodiments of the present specification may be implemented as software including instructions stored in a machine-readable storage media that can be read by a machine (e.g., computer). The machine may include an electronic device according to the disclosed embodiments as a device capable of calling stored instructions from a storage medium and operating according to the called instructions. When the instructions are executed by a processor, the processor can perform functions corresponding to the instructions directly or using other components under the control of the processor. The instructions may include code generated or executed by a compiler or interpreter. The machine-readable storage medium may be provided in the form of a non-transitory storage medium. Here, 'non-transitory storage medium' means that it does not include signals and is tangible, but does not distinguish whether data is stored semi-permanently or temporarily in the storage medium. For example, 'non-transitory storage medium' may include a buffer where data is temporarily stored.

According to one embodiment, the methods according to various embodiments disclosed in this specification may be provided by being included in a computer program product. The computer program product may be traded between sellers and buyers as a commodity. The computer program product may be distributed in the form of a machine-readable storage medium (e.g., Compact Disc Read Only Memory, CD-ROM) or online through an application store (e.g., Play Store^{™}). In the case of online distribution, at least a part of the computer program product (e.g., downloadable app) may be at least temporarily stored or temporarily generated in a storage medium such as the memory of a manufacturer's server, an application store's server, or a relay server.

As described above, although the embodiments have been described with limited embodiments and drawings, those skilled in the art can make various modifications and variations from the above description. For example, appropriate results can be achieved even if the described techniques are performed in a different order than the described method, and/or the components of the described system, structure, device, circuit, etc. are combined or combined in a different form than the described method, or replaced or substituted by other components or equivalents.

Therefore, other implementations, other embodiments, and equivalents to the claims also fall within the scope of the claims described below.

## Claims

1. A method for recognizing a fingerprint in a contactless manner, the method comprising:
acquiring an original image including a user's hand using an optical sensor included in a terminal;
acquiring a hand image from the original image using a neural network model based on the original image;
acquiring at least one fingertip image based on the hand image; and
acquiring at least one fingerprint information from the at least one fingertip image.

2. The method of claim 1, wherein the acquiring the hand image comprises:
inputting the original image to the neural network model to acquire a mask image for the original image, and
applying the mask image to the original image to acquire a hand image with the background removed from the original image.

3. The method of claim 1, wherein the acquiring the hand image comprises:
performing downscaling on the original image to correspond to the neural network model,
inputting the downscaled image to the neural network model to acquire the mask image,
performing upscaling on the mask image to correspond to the original image, and
applying the upscaled mask image to the original image to acquire the hand image.

4. The method of claim 1,
wherein the neural network model includes at least one layer, and
wherein the at least one layer comprises at least one of an Expansion Convolution Layer, a first Batch Normalize Layer, a first H-Swish layer, a Depthwise Convolution Layer, a second Batch Normalize Layer, a second H-Swish layer, a Projection Convolution Layer, or a third Batch Normalize Layer.

5. The method of claim 3, wherein the acquiring the at least one fingertip image comprises:
acquiring a binarized image based on the hand image;
separating the at least one finger image based on the binarized image;
acquiring a block circumscribing the at least one finger image based on the contour of the at least one finger image; and
acquiring the at least one fingertip image based on the horizontal and vertical ratio of the block.

6. The method of claim 5, wherein the acquiring the at least one fingertip image comprises:
acquiring information about whether the user's hand included in the original image is a left hand or a right hand; and
identifying the type of the at least one finger based on information about whether the user's hand included in the original image is a left hand or a right hand.

7. The method of claim 1, wherein the acquiring information about whether the user's hand included in the original image is a left hand or a right hand comprises:
acquiring information about whether the user's hand included in the original image is a left hand or a right hand using an interface displayed on the display of the terminal.

8. The method of claim 1, wherein acquiring information about whether the user's hand included in the original image is a left hand or a right hand comprises:
dividing the hand image into a left image and a right image based on the width of the mask image, and
comparing the ratio of the mask area in the left image and the ratio of the mask area in the right image to determine whether the user's hand included in the original image is for a left hand or a right hand.

9. A computer-readable recording medium recording a program for executing the method according to any one of claims 1 to 8.

10. A terminal for recognizing a fingerprint in a contactless manner, the terminal comprising:
a memory unit; and
a control unit performing operations based on instructions included in the memory unit,
wherein the control unit is configured to:
acquire an original image including a user's hand using an optical sensor included in the terminal,
acquire a hand image from the original image using a neural network model based on the original image,
acquire at least one fingertip image based on the hand image, and
acquire at least one fingerprint information from the at least one fingertip image.

11. A server for recognizing a fingerprint in a contactless manner, the server comprising:
a memory unit;
a communication unit; and
a control unit performing operations based on instructions included in the memory unit,
wherein the control unit is configured to:
acquire an original image including a user's hand from a terminal through the communication unit,
acquire a hand image from the original image using a neural network model based on the original image,
acquire at least one fingertip image based on the hand image, and
acquire at least one fingerprint information from the at least one fingertip image.
